# EUROPÄISCHE PATENTANMELDUNG

(11) **EP 4 477 454 A1**
(43) Veröffentlichungstag der Anmeldung: **18.12.2024**
(21) Anmeldenummer: 24177692.1
(22) Anmeldetag: 23.05.2024
(51) Int. Cl.: B60L 53/12, B60L 53/14, B60L 53/22

(54) **TRAKTIONSNETZ FÜR EIN FAHRZEUG UND VERFAHREN ZUM BETREIBEN EINES TRAKTIONSNETZES**

(30) Priorität: 07.06.2023 DE 102023205302
(71) Anmelder: VOLKSWAGEN AG, 38440 Wolfsburg (DE)
(72) Erfinder: Kusch, Rüdiger, 38116 Braunschweig (DE)

(57) **Zusammenfassung**

Die Erfindung betrifft ein Traktionsnetz (1) für ein Fahrzeug, umfassend mindestens eine Hochvoltbatterie (2), einen Wechselrichter (3), eine Elektromaschine (4), und einen DC/DC-Steller (5), wobei der DC/DC-Steller (5) zwischen der mindestens einen Hochvoltbatterie (2) und dem Wechselrichter (3) angeordnet ist, und wobei der Wechselrichter (3) zwischen dem DC/DC-Steller (5) und der Elektromaschine (4) angeordnet ist, wobei der DC/DC-Steller (5) dazu eingerichtet ist, dass mindestens eine Phase (A,B,C) für einen induktiven AC-Ladeanschluss (11) mit Mittenabgriffen (13-x) von Halbbrücken (12-x) des DC/DC-Stellers (5) verbunden werden kann. Ferner betrifft die Erfindung einen DC/DC-Steller (5) für ein Traktionsnetz (1) und ein Verfahren zum Betreiben eines Traktionsnetzes (1).

## Beschreibung

Die Erfindung betrifft ein Traktionsnetz für ein Fahrzeug und ein Verfahren zum Betreiben eines Traktionsnetzes.

Der typische Aufbau eines Traktionsnetzes besteht aus einer Hochvoltbatterie, einem Wechselrichter und einer Elektromaschine. Zum Stellen eines Spannungsniveaus kann ein zwischen die Hochvoltbatterie und den Wechselrichter geschalteter DC/DC-Steller verwendet werden. Neben einem konduktiven DC-Laden und AC-Laden der Hochvoltbatterie kommen vermehrt auch Lösungen zum induktiven AC-Laden auf den Markt.

Der Erfindung liegt die Aufgabe zu Grunde, ein Traktionsnetz für ein Fahrzeug und ein Verfahren zum Betreiben eines Traktionsnetzes zu schaffen, bei denen ein induktives AC-Laden verbessert erfolgen kann.

Die Aufgabe wird erfindungsgemäß durch ein Traktionsnetz mit den Merkmalen des Patentanspruchs 1, einen DC/DC-Steller mit den Merkmalen des Patentanspruchs 8 und ein Verfahren mit den Merkmalen des Patentanspruchs 9 gelöst. Vorteilhafte Ausgestaltungen der Erfindung ergeben sich aus den Unteransprüchen.

Insbesondere wird ein Traktionsnetz für ein Fahrzeug geschaffen, umfassend mindestens eine Hochvoltbatterie, einen Wechselrichter, eine Elektromaschine und einen DC/DC-Steller, wobei der DC/DC-Steller zwischen der mindestens einen Hochvoltbatterie und dem Wechselrichter angeordnet ist, und wobei der Wechselrichter zwischen dem DC/DC-Steller und der Elektromaschine angeordnet ist, wobei der DC/DC-Steller dazu eingerichtet ist, dass mindestens eine Phase für einen induktiven AC-Ladeanschluss mit Mittenabgriffen von Halbbrücken des DC/DC-Stellers verbunden werden kann.

Ferner wird insbesondere ein Verfahren zum Betreiben eines Traktionsnetzes zur Verfügung gestellt, wobei das Traktionsnetz mindestens eine Hochvoltbatterie, einen Wechselrichter, eine Elektromaschine, und einen DC/DC-Steller aufweist, wobei der DC/DC-Steller zwischen der mindestens einen Hochvoltbatterie und dem Wechselrichter angeordnet ist, und wobei der Wechselrichter zwischen dem DC/DC-Steller und der Elektromaschine angeordnet ist, wobei der DC/DC-Steller zum induktiven AC-Laden derart mit mindestens einer Phase eines induktiven AC-Ladeanschlusses verbunden wird, dass die mindestens eine Phase mit Mittenabgriffen von Halbbrücken des DC/DC-Stellers verbunden ist.

Das Traktionsnetz und das Verfahren ermöglichen es, einen oder mehrere induktive Ladepfade in den DC/DC-Steller einzuspeisen und Bauelemente des DC/DC-Stellers auch zum Gleichrichten eines (induktiven) AC-Ladestroms zu verwenden, um die Hochvoltbatterie zu laden. Durch das Verwenden der Bauelemente des DC/DC-Stellers für mehrere Funktionalitäten kann insbesondere eine benötigte Anzahl von Bauelementen im Traktionsnetz bei gesteigerter Funktionalität nahezu konstant gehalten werden, sodass Aufwand, Bauraum und Kosten eingespart werden können. Hierzu ist vorgesehen, dass der DC/DC-Steller dazu eingerichtet ist, dass mindestens eine Phase für einen induktiven AC-Ladeanschluss mit Mittenabgriffen von Halbbrücken des DC/DC-Stellers verbunden werden kann. Insbesondere weist der DC/DC-Steller hierzu eingerichtete Kontakte auf, beispielsweise in Form von an einem Modulgehäuse angeordneten Kontaktbereichen, die mit der mindestens einen Phase des induktiven AC-Ladeanschlusses verbunden werden können oder mit dieser verbunden sind. Hierdurch können die Halbbrücken des DC/DC-Stellers zum Gleichrichten des induktiv eingespeisten AC-Ladestroms verwendet werden und werden hierzu in an sich bekannter Weise angesteuert. Die Mittenabgriffe sind in einem normalen Betriebszustand, in dem der DC/DC-Steller zum Setzen und/oder Anpassen des Spannungsniveaus verwendet wird, insbesondere über eine Speicherinduktivität miteinander verbunden.

Der DC/DC-Steller dient insbesondere einem Setzen und/oder Anpassen eines Spannungsniveaus der Hochvoltbatterie für den Wechselrichter. Hierdurch kann das Spannungsniveau insbesondere unabhängig von einem Ladezustand der Hochvoltbatterie gesetzt und/oder angepasst werden.

Leistungshalbleiterschalter (z.B. MOSFETs oder IGBTs) des DC/DC-Stellers und des Wechselrichters werden in an sich bekannter Weise angesteuert, um die jeweils angestrebte Funktionalität bereitzustellen. Hierzu weist das Traktionsnetz insbesondere eine oder mehrere Steuereinrichtungen auf, welche Schaltsignale für die jeweiligen Schaltzustände der Leistungshalbleiterschalter erzeugt und bereitstellt.

Der induktive AC-Ladeanschluss kann auch Teil des Traktionsnetzes sein bzw. von diesem umfasst sein.

In einer Ausführungsform ist vorgesehen, dass der DC/DC-Steller eine Schaltlogik aufweist, die dazu eingerichtet ist, in einer Schaltstellung eine Verbindung der mindestens einen Phase für den induktiven AC-Ladeanschluss mit den Mittenabgriffen der Halbbrücken herzustellen. Hierdurch kann eine elektrische Verbindung zu den Mittenabgriffen gezielt hergestellt werden, wenn ein induktives AC-Laden erfolgen soll. Der Schaltzustand der Schaltlogik wird insbesondere mittels einer Steuereinrichtung des Traktionsnetzes eingestellt. Es kann vorgesehen sein, dass die Verbindung zum induktiven AC-Ladeanschluss über hierfür eingerichtete Kontakte ausgebildet wird oder ausgebildet ist.

In einer Ausführungsform ist vorgesehen, dass die Schaltlogik eine weitere Schaltstellung aufweist, in der die mindestens eine Phase für den induktiven AC-Ladeanschluss von den Mittenabgriffen getrennt ist und die Mittenabgriffe der Halbbrücken über eine Speicherinduktivität miteinander verbunden sind. Hierdurch kann gezielt zwischen zumindest zwei Schaltstellungen hin- und hergeschaltet werden, je nachdem, ob ein Setzen und/oder Anpassen des Spannungsniveaus oder ein induktives AC-Laden erfolgen sollen. Der jeweilige Schaltzustand der Schaltlogik wird insbesondere mittels einer Steuereinrichtung des Traktionsnetzes eingestellt.

In einer Ausführungsform ist vorgesehen, dass der AC-Ladeanschluss drei Phasen aufweist, wobei der DC/DC-Steller drei parallele Zweige mit Halbbrücken aufweist, wobei jede der drei Phasen des AC-Ladeanschlusses einem der Zweige zugeordnet ist und mit den jeweiligen Mittenabgriffen der Zweige verbunden werden kann. Hierdurch kann eine Ladeleistung beim induktiven AC-Laden gesteigert werden. Grundsätzlich können auch weitere Phasen und/oder Zweige des DC/DC-Stellers vorgesehen sein.

In einer Ausführungsform ist vorgesehen, dass das Traktionsnetz einen konduktiven AC-Ladeanschluss aufweist. Hierdurch kann auch ein konduktives AC-Laden erfolgen.

In einer Ausführungsform ist vorgesehen, dass das Traktionsnetz einen DC-Ladeanschluss aufweist. Hierdurch kann auch ein DC-Laden erfolgen.

In einer Ausführungsform ist vorgesehen, dass das Traktionsnetz eine weitere Schaltlogik aufweist, wobei die weitere Schaltlogik zwischen dem DC/DC-Steller und dem Wechselrichter angeordnet ist und dazu eingerichtet ist, eine Verbindung mit dem gleichgerichteten konduktiven AC-Ladeanschluss und/oder dem DC-Ladeanschluss herzustellen oder eine solche Verbindung zu trennen. Hierdurch können der gleichgerichtete konduktive AC-Ladeanschluss und/oder der DC-Ladeanschluss elektrisch hinzu- oder weggeschaltet werden, um eine elektrische Verbindung zum Laden herzustellen oder diese für einen anderen Betriebszustand zu trennen. Es kann vorgesehen sein, dass die weitere Schaltlogik dazu eingerichtet ist, in einem anderen Schaltzustand eine elektrische Verbindung zwischen dem DC/DC-Steller und dem Wechselrichter auszubilden, wobei ein elektrische Verbindung zu dem gleichgerichteten konduktiven AC-Ladeanschluss und/oder dem DC-Ladeanschluss getrennt ist oder wird. Ferner kann insbesondere vorgesehen sein, dass eine elektrische Verbindung zwischen dem DC/DC-Steller und dem Wechselrichter getrennt ist oder getrennt wird, wenn der DC/DC-Steller mit dem gleichgerichteten konduktiven AC-Ladeanschluss und/oder dem DC-Ladeanschluss verbunden ist oder verbunden wird. Der jeweilige Schaltzustand der weiteren Schaltlogik wird insbesondere mittels einer Steuereinrichtung des Traktionsnetzes eingestellt.

In einer Ausführungsform ist vorgesehen, dass Leistungshalbleiterschalter von Halbbrücken für verschiedene Zweige des DC/DC-Stellers unterschiedlich ausgelegt sind. Hierdurch können für die Zweige unterschiedliche Leistungsklassen bereitgestellt werden. Beispielsweise kann ein Zweig, beispielsweise ein Zweig, über den ein einphasiges induktives AC-Laden erfolgen soll, leistungsstärkere Leistungshalbleiterschalter aufweisen als zwei (oder mehr) andere Zweige. Die Leistungshalbleiterschalter der anderen Zweige können dann kostengünstiger bereitgestellt werden.

Weiter wird insbesondere auch ein DC/DC-Steller für ein Traktionsnetz geschaffen, wobei der DC/DC-Steller dazu eingerichtet ist, dass mindestens eine Phase für einen induktiven AC-Ladeanschluss mit Mittenabgriffen von Halbbrücken des DC/DC-Stellers verbunden werden kann. Weitere Ausgestaltungen des DC/DC-Stellers ergeben sich aus der Beschreibung von Ausgestaltungen des Traktionsnetzes. Die Vorteile des DC/DC-Stellers sind hierbei jeweils die gleichen wie bei den Ausgestaltungen des Traktionsnetzes. Der DC/DC-Steller kann beispielsweise als Modul ausgebildet sein, welches zusätzliche Kontakte aufweist, die im Modul mit den Mittenabgriffen der Halbbrücken verbunden werden können oder verbunden sind und an denen von außen eine Verbindung zu der mindestens einen Phase des induktiven AC-Ladeanschlusses hergestellt werden kann. Der DC/DC-Steller im Traktionsnetz wird insbesondere in geeigneter Weise angesteuert, insbesondere mittels einer hierfür eingerichteten Steuereinrichtung. Hierbei sind insbesondere folgende Betriebsarten möglich: Setzen und/oder Anpassen eines Spannungsniveaus (bidirektional) oder Gleichrichten des induktiven AC-Ladestroms.

Weitere Merkmale zur Ausgestaltung des Verfahrens ergeben sich aus der Beschreibung von Ausgestaltungen des Traktionsnetzes. Die Vorteile des Verfahrens sind hierbei jeweils die gleichen wie bei den Ausgestaltungen des Traktionsnetzes.

Nachfolgend wird die Erfindung anhand bevorzugter Ausführungsbeispiele unter Bezugnahme auf die Figuren näher erläutert. Hierbei zeigen:
- Fig. 1: eine schematische Darstellung zur Verdeutlichung von Ausführungsformen des Traktionsnetzes für ein Fahrzeug;
- Fig. 2: eine schematische Darstellung zur Verdeutlichung einer Ausführungsform des Traktionsnetzes;
- Fig. 3: eine schematische Darstellung zur Verdeutlichung einer weiteren Ausführungsform des Traktionsnetzes;
- Fig. 4: eine schematische Darstellung zur Verdeutlichung einer weiteren Ausführungsform des Traktionsnetzes.

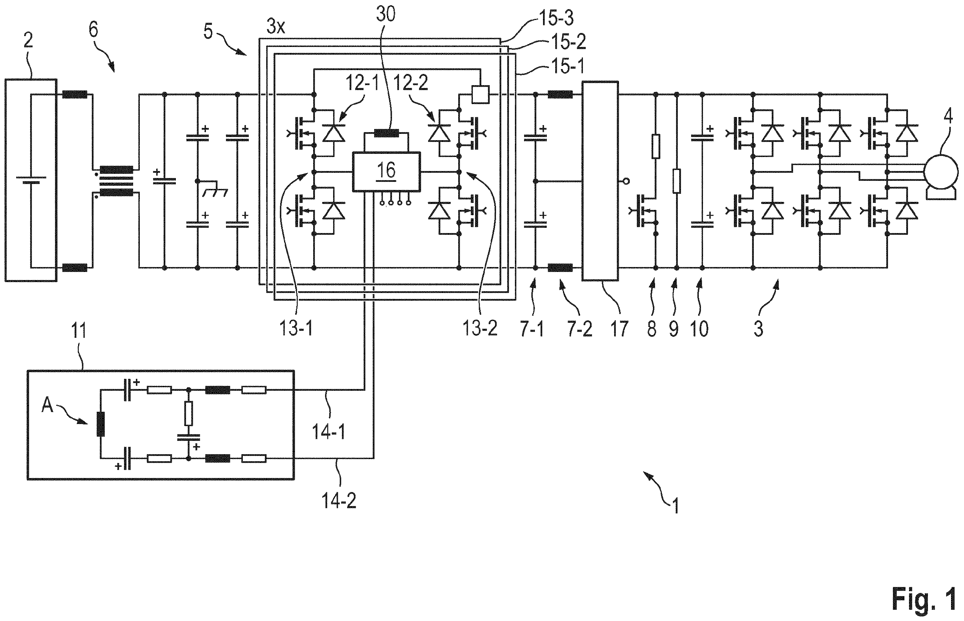

Die Fig. 1 zeigt eine schematische Darstellung zur Verdeutlichung von Ausführungsformen des Traktionsnetzes 1 für ein Fahrzeug. Das Traktionsnetz 1 umfasst eine Hochvoltbatterie 2, einen Wechselrichter 3, eine Elektromaschine 4 und einen DC/DC-Steller 5. Der DC/DC-Steller 5 ist insbesondere ein bidirektionaler DC/DC-Steller 5. Der DC/DC-Steller 5 ist zwischen der Hochvoltbatterie 2 und dem Wechselrichter 3 angeordnet. Der Wechselrichter 3 ist zwischen dem DC/DC-Steller 5 und der Elektromaschine 4 angeordnet und insbesondere als Pulswechselrichter ausgebildet.

Zwischen der Hochvoltbatterie 2 und dem DC/DC-Steller 5 ist ferner insbesondere ein zweistufiger DC-Eingangsfilter 6 angeordnet, umfassend mehrere Drosseln und Kondensatoren (nicht mit eigenen Bezugszeichen gekennzeichnet). Zwischen dem DC/DC-Steller 5 und dem Wechselrichter 3 sind ferner insbesondere Zwischenkreiskondensatoren 7-1 und Drosselspulen 7-2 sowie ein aktiver Entladezweig 8, ein passiver Entladezweig 9 und Zwischenkreiskondensatoren 10 angeordnet. Ferner sind Sicherungen 17 vorgesehen, mit denen eine Verbindung zwischen dem DC/DC-Steller 5 und dem Wechselrichter 3 unterbrochen werden kann.

Der DC/DC-Steller 5 ist dazu eingerichtet, dass mindestens eine Phase A für einen induktiven AC-Ladeanschluss 11 mit Mittenabgriffen 13-1, 13-2 von Halbbrücken 12-1, 12-2 des DC/DC-Stellers 5 verbunden werden kann. Zum Verbinden werden die Leitungen 14-1, 14-2 der Phase A mit den Mittenabgriffen 13-1, 13-2 verbunden, beispielsweise die Leitung 14-1 mit dem Mittenabgriff 13-1 und die Leitung 14-2 mit dem Mittenabgriff 13-2. Das Verbinden erfolgt immer dann, wenn ein induktives AC-Laden erfolgen soll. Soll ein induktives AC-Laden erfolgen, so werden die Leistungshalbleiterschalter der Halbbrücken 12-1, 12-2 des DC/DC-Stellers 5 entsprechend angesteuert, um den AC-Ladestrom gleichzurichten und die Hochvoltbatterie 2 zu laden, insbesondere mittels einer hierfür eingerichteten Steuereinrichtung (nicht gezeigt) des Traktionsnetzes 1.

Der DC/DC-Steller 5 umfasst insbesondere drei parallel geschaltete Zweige 15-x, die von der Struktur her alle gleichartig aufgebaut sind und insbesondere jeweils zwei Halbbrücken 12-1, 12-2 umfassen. Hierdurch kann eine versetzte Taktung der Leistungshalbleiterschalter der Zweige 15-x erfolgen. Darüber hinaus sind die Leistungshalbleiterschalter auch asymmetrisch auslegbar, das heißt, die Leistungshalbleiterschalter weisen unterschiedliche Leistungsklassen auf. Beispielsweise kann in der gezeigten Ausführungsform vorgesehen sein, dass Leistungshalbleiterschalter desjenigen Zweiges 15-x des DC/DC-Stellers 5, der zum induktiven AC-Laden verwendet werden soll, leistungsstärker ausgelegt sind, als die Leistungshalbleiterschalter in den anderen Zweigen 15-x. Hierdurch kann der Zweig 15-x für das induktive AC-Laden besonders leistungsfähig ausgelegt werden, bei den anderen Zweigen 15-x können hingegen Kosten eingespart werden, wenn die Leistungshalbleiterschalter dort weniger leistungsfähig ausgelegt sind.

Es kann vorgesehen sein, dass der DC/DC-Steller 5 eine Schaltlogik 16 aufweist, die dazu eingerichtet ist, in einer Schaltstellung eine Verbindung der mindestens einen Phase A für den induktiven AC-Ladeanschluss 11 mit den Mittenabgriffen 13-1, 13-2 der Halbbrücken 12-1, 12-2 herzustellen. Die Schaltlogik 16 wird insbesondere von einer Steuereinrichtung (nicht gezeigt) des Traktionsnetzes 1 gesteuert.

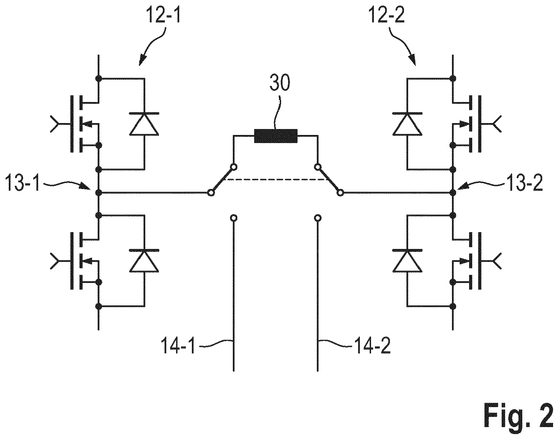

Es kann vorgesehen sein, dass die Schaltlogik 16 eine weitere Schaltstellung aufweist, in der die mindestens eine Phase A für den induktiven AC-Ladeanschluss 11 von den Mittenabgriffen 13-1, 13-2 getrennt ist und die Mittenabgriffe 13-1, 13-2 der Halbbrücken 12-1, 12-2 über eine Speicherinduktivität 30 miteinander verbunden sind. Dies ist schematisch in der Fig. 2 verdeutlicht, in der zwei Schaltstellungen möglich sind, wobei die Mittenabgriffe 13-1, 13-2 entweder mit der Speicherinduktivität 30 (entspricht der in der Fig. 2 gezeigten Schaltstellung) oder mit den Leitungen 14-1, 14-2 der Phase A verbunden sind.

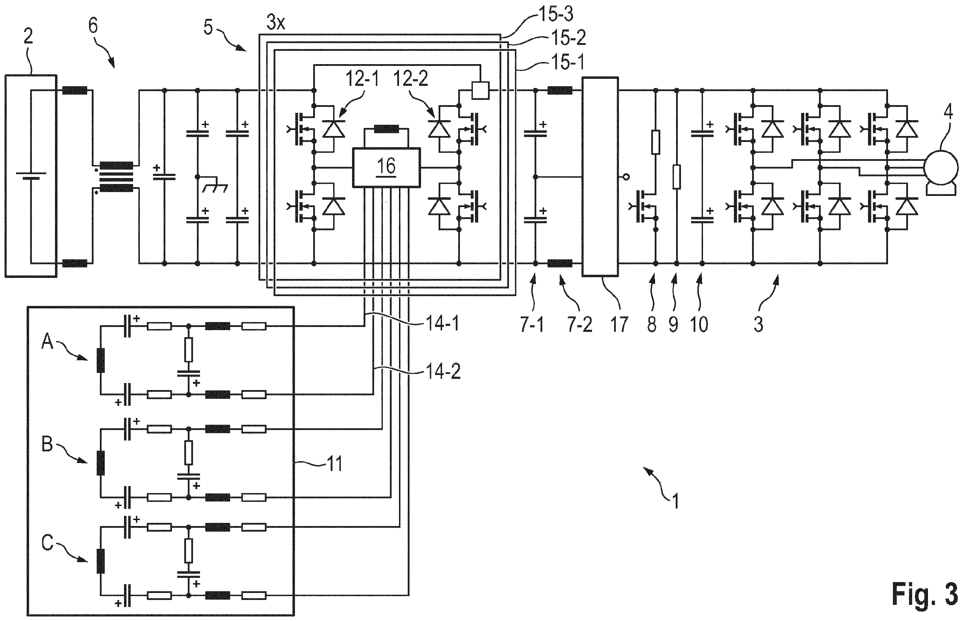

Die Fig. 3 zeigt eine schematische Darstellung zur Verdeutlichung einer weiteren Ausführungsform des Traktionsnetzes 1. Die Ausführungsform ist grundsätzlich wie die bereits beschriebenen Ausführungsformen ausgestaltet, gleiche Bezugszeichen bezeichnen gleiche Merkmale und Begriffe. Es ist bei dieser Ausführungsform vorgesehen, dass der AC-Ladeanschluss 11 drei Phasen A, B, C aufweist, wobei der DC/DC-Steller 5 drei parallele Zweige 15-x mit Halbbrücken 12-1, 12-2 aufweist, wobei jede der drei Phasen A, B, C des AC-Ladeanschlusses 11 einem der Zweige 15-x zugeordnet ist und mit den jeweiligen Mittenabgriffen 12-1, 12-2 der Zweige 15-x verbunden werden kann. Das Verbinden erfolgt für jede Phase A, B, C grundsätzlich insbesondere wie in der Fig. 2 schematisch gezeigt. Soll ein induktives AC-Laden über alle drei Phasen A, B, C erfolgen, so werden die Leistungshalbleiterschalter der Halbbrücken 12-1, 12-2 des DC/DC-Stellers 5 in allen Zweigen 15-x entsprechend angesteuert, um den AC-Ladestrom gleichzurichten und die Hochvoltbatterie 2 zu laden.

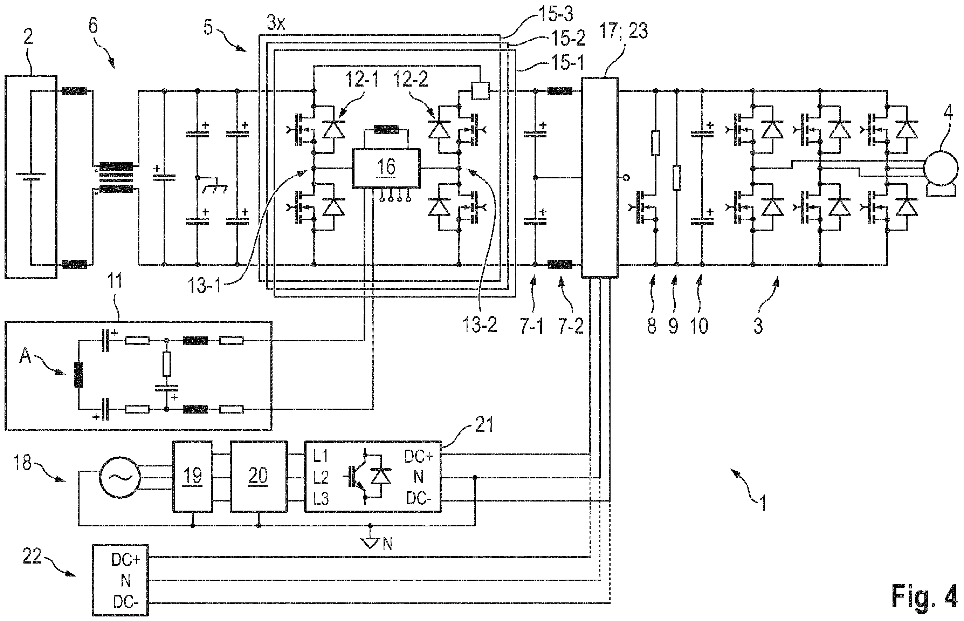

Die Fig. 4 zeigt eine schematische Darstellung zur Verdeutlichung einer weiteren Ausführungsform des Traktionsnetzes 1. Die Ausführungsform ist grundsätzlich wie die bereits beschriebenen Ausführungsformen ausgestaltet, gleiche Bezugszeichen bezeichnen gleiche Merkmale und Begriffe. Es ist bei dieser Ausführungsform vorgesehen, das das Traktionsnetz 1 einen konduktiven AC-Ladeanschluss 18 aufweist. Der konduktive AC-Ladeanschluss 18 umfasst insbesondere ein Eingangsfilter 19, ein Ableitstromfilter 20 und einen Gleichrichter 21, beispielsweise mit Power Factor Correction (PFC) als Neutral Point Clamped (NPC) oder Vienna-Gleichrichter oder ein Weissach-Gleichrichter. Der gleichgerichtete konduktive AC-Ladeanschluss 18 ist zwischen dem DC/DC-Steller 5 und dem Wechselrichter 3 in das Traktionsnetz 1 eingebunden.

Es kann vorgesehen sein, dass das Traktionsnetz 1 einen DC-Ladeanschluss 22 aufweist. Dies ist schematisch als Alternative zum konduktiven AC-Ladeanschluss 18 dargestellt. Das Traktionsnetz 1 kann aber auch einen konduktiven AC-Ladeanschluss 18 und einen DC-Ladeanschluss 22 aufweisen.

Es kann vorgesehen sein, dass das Traktionsnetz 1 eine weitere Schaltlogik 23 aufweist, wobei die weitere Schaltlogik 23 zwischen dem DC/DC-Steller 5 und dem Wechselrichter 3 angeordnet ist und dazu eingerichtet ist, eine Verbindung mit dem gleichgerichteten konduktiven AC-Ladeanschluss 18 und/oder dem DC-Ladeanschluss 22 herzustellen oder eine solche Verbindung zu trennen. Die weitere Schaltlogik 23 ist in der gezeigten Ausführungsform gemeinsam mit den Sicherungen 17 ausgebildet. Die weitere Schaltlogik 23 ist insbesondere dazu eingerichtet, in einem Schaltzustand den DC/DC-Steller 5 mit dem Wechselrichter 3 zu verbinden, in einem anderen Schaltzustand den DC/DC-Steller 5 hingegen mit dem DC-Ladeanschluss 22 zu verbinden und insbesondere eine Verbindung zum Wechselrichter 3 zu trennen. Ferner kann ein dritter Schaltzustand vorgesehen sein, bei dem der DC/DC-Steller 5 mit dem konduktiven AC-Ladeanschluss 18 verbunden wird oder verbunden ist und eine Verbindung zum Wechselrichter 3 getrennt ist.

### Bezugszeichenliste

- 1: Traktionsnetz
- 2: Hochvoltbatterie
- 3: Wechselrichter
- 4: Elektromaschine
- 5: DC/DC-Steller
- 6: DC-Eingangsfilter
- 7-1: Zwischenkreiskondensator
- 7-2: Drosselspulen
- 8: aktiver Entladezweig
- 9: passiver Entladezweig
- 10: Zwischenkreiskondensatoren
- 11: induktiver AC-Ladeanschluss
- 12-x: Halbbrücken
- 13-x: Mittenabgriff
- 14-x: Leitung
- 15-x: Zweig
- 16: Schaltlogik
- 17: Sicherungen
- 18: konduktiver AC-Ladeanschluss
- 19: Eingangsfilter
- 20: Ableitstromfilter
- 21: Gleichrichter
- 22: DC-Ladeanschluss
- 23: weitere Schaltlogik
- 30: Speicherinduktivität
- A: Phase
- B: Phase
- C: Phase

## Patentansprüche

1. Traktionsnetz (1) für ein Fahrzeug, umfassend:
mindestens eine Hochvoltbatterie (2),
einen Wechselrichter (3),
eine Elektromaschine (4), und
einen DC/DC-Steller (5), wobei der DC/DC-Steller (5) zwischen der mindestens einen Hochvoltbatterie (2) und dem Wechselrichter (3) angeordnet ist, und
wobei der Wechselrichter (3) zwischen dem DC/DC-Steller (5) und der Elektromaschine (4) angeordnet ist,
wobei der DC/DC-Steller (5) dazu eingerichtet ist, dass mindestens eine Phase (A,B,C) für einen induktiven AC-Ladeanschluss (11) mit Mittenabgriffen (13-x) von Halbbrücken (12-x) des DC/DC-Stellers (5) verbunden werden kann.

2. Traktionsnetz (1) nach Anspruch 1, **dadurch gekennzeichnet, dass** der DC/DC-Steller (5) eine Schaltlogik (16) aufweist, die dazu eingerichtet ist, in einer Schaltstellung eine Verbindung der mindestens einen Phase (A,B,C) für den induktiven AC-Ladeanschluss (11) mit den Mittenabgriffen (13-x) der Halbbrücken (12-x) herzustellen.

3. Traktionsnetz (1) nach Anspruch 2, **dadurch gekennzeichnet, dass** die Schaltlogik (16) eine weitere Schaltstellung aufweist, in der die mindestens eine Phase (A,B,C) für den induktiven AC-Ladeanschluss (11) von den Mittenabgriffen (13-x) getrennt ist und die Mittenabgriffe (13-x) der Halbbrücken (12-x) über eine Speicherinduktivität (30) miteinander verbunden sind.

4. Traktionsnetz (1) nach einem der vorangegangenen Ansprüche, **dadurch gekennzeichnet, dass** der AC-Ladeanschluss (11) drei Phasen (A,B,C) aufweist, wobei der DC/DC-Steller (5) drei parallele Zweige (15-x) mit Halbbrücken (12-x) aufweist, wobei jede der drei Phasen (A,B,C) des AC-Ladeanschlusses (11) einem der Zweige (15-x) zugeordnet ist und mit den jeweiligen Mittenabgriffen (13-x) der Zweige (15-x) verbunden werden kann.

5. Traktionsnetz (1) nach einem der vorangegangenen Ansprüche, **gekennzeichnet durch** einen konduktiven AC-Ladeanschluss (18).

6. Traktionsnetz (1) nach einem der vorangegangenen Ansprüche, **gekennzeichnet durch** einen DC-Ladeanschluss (22).

7. Traktionsnetz (1) nach Anspruch 5 oder 6, **gekennzeichnet durch** eine weitere Schaltlogik (23), wobei die weitere Schaltlogik (23) zwischen dem DC/DC-Steller (5) und dem Wechselrichter (3) angeordnet ist und dazu eingerichtet ist, eine Verbindung mit dem gleichgerichteten konduktiven AC-Ladeanschluss (18) und/oder dem DC-Ladeanschluss (22) herzustellen oder eine solche Verbindung zu trennen.

8. DC/DC-Steller (5) für ein Traktionsnetz (1),
wobei der DC/DC-Steller (5) dazu eingerichtet ist, dass mindestens eine Phase (A,B,C) für einen induktiven AC-Ladeanschluss (11) mit Mittenabgriffen (13-x) von Halbbrücken (12-x) des DC/DC-Stellers (5) verbunden werden kann.

9. Verfahren zum Betreiben eines Traktionsnetzes (1),
wobei das Traktionsnetz (1) mindestens eine Hochvoltbatterie (2), einen Wechselrichter (3), eine Elektromaschine (4), und einen DC/DC-Steller (5) aufweist, wobei der DC/DC-Steller (5) zwischen der mindestens eine Hochvoltbatterie (2) und dem Wechselrichter (3) angeordnet ist, und wobei der Wechselrichter (3) zwischen dem DC/DC-Steller (5) und der Elektromaschine (4) angeordnet ist,
wobei der DC/DC-Steller (5) zum induktiven AC-Laden derart mit mindestens einer Phase (A,B,C) eines induktiven AC-Ladeanschlusses (11) verbunden wird, dass die mindestens eine Phase (A,B,C) mit Mittenabgriffen (13-x) von Halbbrücken (12-x) des DC/DC-Stellers (5) verbunden ist.

10. Verfahren nach Anspruch 9, **dadurch gekennzeichnet, dass** zum induktiven AC-Laden eine Schaltlogik (16) des DC/DC-Stellers (5) derart angesteuert wird, dass ein Kontakt der mindestens einen Phase (A,B,C) für den induktiven AC-Ladeanschluss (11) mit den Mittenabgriffen (13-x) der Halbbrücken (12-x) hergestellt wird.
